# EUROPÄISCHE PATENTSCHRIFT

(11) **EP 1 655 859 B1**
(45) Veröffentlichungstag und Bekanntmachung des Hinweises auf die Patenterteilung: **27.04.2011**
(21) Anmeldenummer: 04026019.2
(22) Anmeldetag: 03.11.2004
(51) Int. Cl.: H04B 5/00, B61L 3/22

(54) **Verfahren und System zur Datenübertragung mittels Stromschlaufe**
Method and system for data transmission using a current loop
Procédé et système pour transmission de données avec une boucle de courant

(43) Veröffentlichungstag der Anmeldung: 10.05.2006
(73) Patentinhaber: Siemens Schweiz AG, 8047 Zürich (CH)
(72) Erfinder: Schmid, Rolf, 8712 Stäfa (CH)
(74) Vertreter: Kley, Hansjörg

(56) Entgegenhaltungen:
- EP-A- 1 413 495
- DE-A1- 2 048 849
- US-A- 3 576 524

## Beschreibung

Die Erfindung bezieht sich auf ein Verfahren und ein System zur Datenübertragung zwischen einem schienengebundenen Fahrzeug und einer sich längs eines Schienenstrangs erstreckenden Übertragungseinrichtung mittels eines elektromagnetischen Feldes, wobei im niederfrequenten Bereich von einer Dominanz des Magnetfeldes auszugehen ist.

Die vorliegende Erfindung betrifft das Gebiet der drahtlosen Datenübertragung für das Gebiet der Zugbeeinflussung und der Übertragung von Nutzdaten auf ein Schienenfahrzeug, wie zum Beispiel die Bereitstellung von Mobilfunk für die Fahrgäste in einem Zug. Um besonders den Sicherheitsnachweis bei der Übertragung von Daten zwischen einem schienengebundenen Fahrzeug und der sich entlang des Schienenstrangs erstreckenden Übertragungseinrichtung führen zu können, ist es erforderlich, die entlang der Übertragungsstrecke auftretenden elektromagnetischen Störfelder zu kennen. Diese Störfelder resultieren insbesondere aus:
a) Traktionsströmen in Fahrdraht, Schiene und Fahrzeug;
b) Ströme aus den eingesetzten Wirbelstrombremsen.

Dabei werden diese Störfelder durch das im Gleisbereich massiv vorhandene ferro-magnetische Material verändert, insbesondere durch Reflexion, Phasenverschiebungen und durch lokal induzierte Sekundärströme.

Die bekannten Datenübertragungsverfahren beruhen darauf, dass einem Trägersignal die zu übertragenden Daten aufmoduliert werden und nach erfolgter Übertragung über die Luftstrecke beim Empfänger demoduliert werden. Die bei der Demodulierung erzielbare Auflösung ist sehr stark abhängig von Pegel und Frequenz der Störfelder. Da durch die Zugbeeinflussungssysteme sicherheitsrelevante Daten für den Eisenbahnverkehr wie z.B. eine zulässige Höchstgeschwindigkeit oder ein HALT zeigendes Signal übermittelt werden, ist eine verbindliche Aussage über den Wahrheitsgehalt der empfangenen und demodulierten Daten zwingend erforderlich.

Einrichtungen zur Datenübertragung zwischen einem schienengebundenen Fahrzeug und auf einem festen Streckenpunkt sind standardisiert und z.B. in [1] spezifiziert. Gemäss [1] ist ein aufwendiges Verfahren für die Nachbearbeitung erforderlich, um Integrität und Authentizität der empfangenen Daten sicherzustellen.

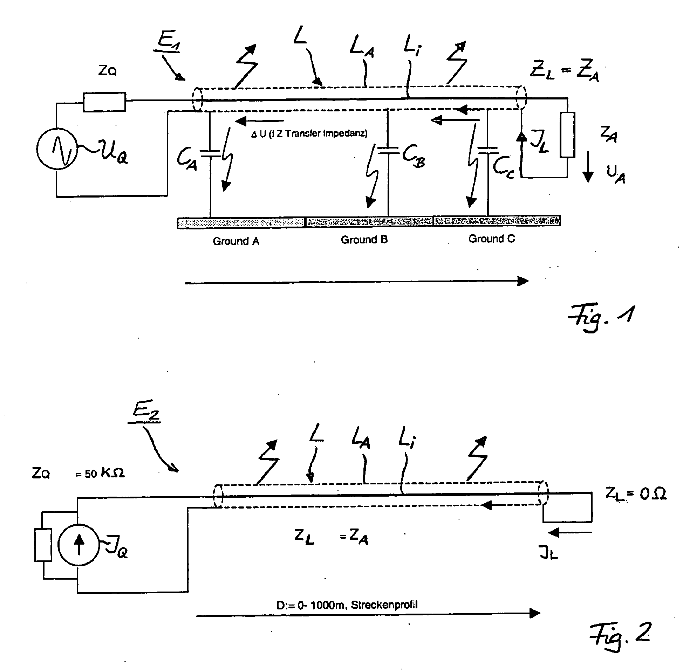

Besonders bei sogenannten Linienzugbeeinflussungssystemen werden sogenannte Leckkabel, also strahlende Koaxialkabel mit im Aussenleiter angeordneten Löchern und Schlitzen, eingesetzt, die zum Teil über erhebliche Streckenlängen verlegt werden und daher in der Wechselwirkung mit dem das Leckkabel umgebenden elektromagnetisch wirksamen Umfeld erheblich in ihrer Abstrahlcharakteristik beeinflusst werden. Eine derartige Einrichtung ist beispielsweise von der Siemens Schweiz AG unter dem Namen "EUROLOOP S21® auf dem Markt erhältlich und schematisch in der Figur 1 dargestellt. Ein derartiges System weist eine Spannungsquelle mit einer Eigenimpedanz und einen Impedanzabschluss auf, der in der Regel etwa so gross ist wie die Impedanz des Leitungsweges. Besonders Metallkonstruktionen, wie Z-Verbinder, Stösse und Untergrundunebenheiten haben dabei einen grossen Einfluss auf das Abstrahlverhalten von symmetrischen und asymmetrischen Antennensystemen, die aufgrund von Leckströmen und örtlich variablen Streufeldern auftreten können. Zu diesem Zweck wurde daher der Impedanzabschluss als Symmetrie- bzw. Längsdrossel bei Einspeisemassnahmen und Isolierübergängen eingesetzt um die unsymmetrisch fliessenden Streuströme zu verkleinern bzw. ganz zu eliminieren.

Diese Ausgestaltung hat jedoch zur Folge, dass zum Teil erhebliche variante Spannungspotentiale über die Ausdehnung aufgetreten sind und erhebliche Pegelüberhöhungen bei Untergrundänderungen auftreten konnten. Zugleich war aus diesen Gründen die in die Stromschlaufe einzukoppelnde Leistung vergleichsweise hoch, die vor allen Dingen auch am Impedanzabschluss aufgrund der dort entstehenden Ohm'schen Wärme in geeigneter Weise durch zusätzliche Massnahmen abgeführt werden musste.

Im Dokument D1 ist ein System zur Übertragung von Informationen auf fahrende Züge offenbart, bei dem eine Mehrzahl von längs eines Gleises aufeinanderfolgender Schleifen angeordnet ist. Jede dieser Schleifen wird von einer Wechselstromquelle im Frequenzbereich 20 .. 150kHz gespeist. Pro Schleife wird ein Bit übertragen, die Information 0 oder 1 wird abhängig über den Stromfluss im Uhrzeigersinn oder Gegenuhrzeigersinn übertragen.

Das Dokument D2 offenbart ein Nachrichtenübertragungssystem uner Verwendung eines koaxialen mit Schlitzen versehenen Kabels mit einem Tragseil (messenger wire). Aufgrund der verschiedenen elektrischen Eigenschaften von Koaxialkabel und Tragseil wird vorgeschlagen, den Widerstandswert des Zentralleiters (des Tragseils) und der Winderstandswert des Innenleiters des koaxialen Kabels nahezu gleich festzulegen.

Im Dokument D3 ist anstelle des aus dem Stand der Technik bekannten Leckkabels ein verdrilltes Leiterpaar mit symmetrischem Aufbau als Antennenanordnung offenbart. Die beiden Leiter des Leiterpaars fungieren als Hin- und Rückleitung. Dadurch haben insbesondere Unstetigkeitsstellen längs eines Geleises wie z.B. Schienenstösse oder Weichen und Kreuzungen keinen Einfluss auf das von der Antennenanordnung erzeugte Magnetwechselfeld.

Der vorliegenden Erfindung liegt daher die Aufgabe zugrunde, ein Verfahren und ein System zur Datenübertragung zwischen einem schienengebundenen Fahrzeug und einer sich entlang eines Schienenstranges ausdehnenden Übertragungseinrichtung anzugeben, welche weitgehend immun gegen die im Gleisbereich und/oder Fahrzeugbereich auftretenden Inhomogenitäten sind und zugleich eine sichere und zuverlässige Datenübertragung ermöglichen.

Diese Aufgabe wird durch das im Patentanspruch 1 angegebene Verfahren und das im Patentanspruch 4 angegebene System gelöst.

Erfindungsgemäss sind ein Verfahren und ein System zur Datenübertragung zwischen einem schienengebundenen Fahrzeug und einer sich längs eines Schienenstrangs erstreckenden Übertragungseinrichtung mittels eines elektromagnetischen Feldes vorgesehen, bei denen die Übertragungseinrichtung als eine mindestens teilweise als Leckkabel gestaltete Stromschlaufe ausgestaltet wird und die zu übertragenden Daten stromgetrieben mittels einer Stromquelle in die Stromschlaufe eingeprägt werden und dass die Stromschlaufe am Abschluss fehlangepasst auf 0 Ω gesetzt wird.

Auf diese Weise wird erreicht, dass über die Länge der Stromschlaufe nur minimale vernachlässigbare durch Leckströme erzeugte Spannungspotentiale auftreten und damit unsymmetrische Ströme weitgehend vermieden werden. Insgesamt ist daher eine Verbesserung der Homogenität eines Übertragungskanals im Gleisbereich erzielt. Diese Lösung zeichnet sich weiter dadurch aus, dass bei einer Leistungseinsparung von etwa 75% die gleiche Abstrahlcharakteristik gegeben wie bei einem Leckkabel mit Abschlussimpedanz, weil ja der Leckstrom identisch ist. Überhöhungen der Pegel bei Untergrundänderungen sind um das Verhältnis der kleineren Leckströme von ca. 20, also etwa 26 dB kleiner.

In Anpassung der Stromquelle an die Stromschlaufe kann es vorgesehen sein, die Impedanz der Stromquelle in einen Bereich von 20 bis 100 kΩ, vorzugsweise auf etwa 50 kΩ, einzustellen. Auf diese weise entsteht nur eine Stossstelle, und das Antennensystem ist virtuell abgeschlossen.

Für diesen virtuellen Abschluss ist es daher vorteilhaft, die Stromschlaufe am Abschluss fehlangepasst auf 0 Ω zu setzen, was keinerlei Kurzschlussproblemtik wegen der Verwendung der Stromquellen getriebenen Datenübertragung verursacht, sondern ganz bewusst einen Spannungsabfall am Impedanzabschluss ausschliesst. Für die Stärke des abgestrahlten bzw. ausgekoppelten Feldes ist dabei die geometrische Distanz von Hin- und Rückleiter massgeblich.

Zur Definition von bestimmten Übertragungsbereichen entlang der Stromschlaufe ist es zweckmässig, die Stromschlaufe zumindest teilweise als Leckkabel auszustalten. Die Übertragungsrate hängt dabei von dem induktiven bzw. kapazitiven Impedanzbelag des verwendeten Kabels und der Länge des Kabels ab. Sinnvolle Übertragungsraten können bei 1 bis 10 kHz bei einer Länge der Stromschlaufe von bis zu 10 km liegen.

Für die meisten Anwendungen, wie die Übermittlung eines Zugbeeinflussungstelegramms oder die Übermittlung von Fahrgastinformationsdaten, ist daher besonders zweckmässig, die Stromschlaufe über eine Länge von mehreren hundert Metern entlang des Schienenstranges verlaufend anzuordnen.

Weitere vorteilhafte Ausgestaltungen der Erfindung sind in übrigen Unteransprüchen angegeben.

Die Erfindung wird nachfolgend anhand einer Zeichnung beispielsweise näher erläutert. Dabei zeigen:
- Figur 1: eine schematische Darstellung einer ersten Einrichtung zur Datenübertragung mit einem Leckkabel nach dem Stand der Technik; und
- Figur 2: eine schematische Darstellung einer zweiten Einrichtung zur Datenübertragung mit einem Leckkabel gemäss der Erfindung.

Die Figur 1 zeigt schematisch eine erste nach dem Stand der Technik gestaltete Einrichtung E₁ zur Datenübertragung mit einem koaxial aufgebauten Leckkabel L, das einen Innenleiter Lᵢ und einen geschlitzten Aussen L_{A} aufweist. Dieses Leckkabel L ist auf einer Strecke von 1000 m über drei verschiedenen Untergrundbelägen Ground A, Ground B und Ground C verlegt. Die Untergrundbeläge können beispielsweise eine Betontrasse, eine Holzkonstruktion, eine Metallbrücke oder ähnliches sein, woran leicht erkennbar ist, dass diese Untergrundbeläge ein elektromagnetisch sehr unterschiedliches Verhalten zeigen, was durch die Leckkapazitäten C_{A}, C_{B} und C_{C} repräsentiert werden soll. Eingangsseitig ist das Leckkabel L an eine Wechselspannungsquelle U_{Q} mit einer Quelleimpedanz Z_{Q} geschlossen. Abschlussseitig ist ein Abschlussverbraucher mit einer Abschlussimpedanz Z_{A} angeschlossen, über den die Verbindung von Innen- und Aussenleiter Lᵢ und L_{A} hergestellt wird. Die Abschlussimpedanz Z_{A} wird dabei gleich der Leitungsimpedanz Z_{L} gewählt, um das Übertragungssystem in angepasster Form abzuschliessen. Die Spannungsquelle U_{Q} arbeitet mit einer Leistungsaufnahme von etwa 50 Watt, bei einer Frequenz von etwa 1 bis 7 MHz und einer Datenrate vor DSSS-Codierung von 9567,44 Bit/s. Je nach Untergrundbelag können sich über den Leckkabel L Spannungsdifferenzen ΔU aufbauen, die sich auf dem Produkt von Leckstrom I_{L} und der Transfer-Impedanz zwischen zwei oder mehreren hintereinanderfolgenden Untergrundbelägen ergeben können. Diese Spannungsdifferenzen führen unter Umständen zu sehr unsymmetrischen Strömen und damit zu sehr unterschiedlichen Signalpegeln entlang des Leckkabels L.

Figur 2 zeigt nun in schematischer Darstellung eine erfindungsgemässe zweite Einrichtung E₂ zur Datenübertragung mit dem gleichen Leckkabel L. Anstelle der Spannungsquelle U_{Q} ist hier eine Stromquelle I_{Q} mit einer Impedanz Z_{Q} von 50 kΩ vorgehen. Weiter befindet sich das Leckkabel L in Fehlanpassung, weil die Abschlussimpedanz hier 0 Ω beträgt. Damit ist bei geeigneter Einstellung der Parameter Frequenz und Länge des Leckkabels L sicherstellbar, dass entlang des Leckkabels L überall der gleiche Leckstrom I_{L} fliesst. Bei einer Betriebskapazität eines Leckkabels L von 27 nF/km (Ader-Ader) und einer Unsymmetriekapazität des Leckkabels von 850 pF/km (Ader-Erde) und einem Schleifenwiderstand von 15 Ω/km ergeben sich somit optimale Bedingungen für die Datenübertragung mittels des von dem Leckkabel L abgestrahlten Magnetfeldes sogar bis zu Distanzen von 20 km bei Betriebsfrequenz von noch bis zu 15 kHz. Auf diese Weise ist zwar die Datenrate kleiner als bei der vorstehend genannten Lösung, dafür zeichnet sich die Lösung aber durch ein Vielzahl von Vorteilen:
a) Für einen Übertragungskanal im Gleisbereich wird eine über die gesamte Länge des Leckkabels gegebene Homogenität des Übertragungssignals erreicht;
b) Über die Länge der Stromschlaufe treten nur minimale durch den Impedanzbelag des Leckkabels verursachte Spannungspotentiale auf, wodurch Unsymmetrien des Leckstroms sicher vermieden sind;
c) Das Leckkabel L hat bei erheblich verminderter Leistungsaufnahme die gleiche Abstrahlcharakteristik wie eine im Stand der Technik bekannte Übertragungseinrichtung, weil in beiden Varianten der Leckstrom identisch ist;
d) Überhöhungen der Signalpegel aufgrund von Untergrundänderung sind bis 26 dB geringer;
e) Weil die Impedanz der Quelle gross ist gegen die Impedanz des Leckkabels ergibt sich ein Stossstelle für die elektromagnetischen Wellen, wodurch das System als solches virtuell abgeschlossen ist;
f) Aufgrund des niederfrequenten Signals sind die Reflexionen des Signals sowohl uplink als auch downlink stark begrenzt.

### Liste der verwendeten Zeichen

- A: Ground
- B: Ground
- C: Ground
- C_{A}: Leckkapazität
- C_{B}: Leckkapazität
- C_{C}: Leckkapazität
- E₁: Einrichtung zur Datenübertragung mit einem koaxial aufgebauten Leckkabel nach dem Stand der Technik
- E₂: Einrichtung zur Datenübertragung mit einem Leckkabel gemäss der Erfindung
- L: Leckkabel
- L_{A}: Aussenleiter
- Lᵢ: Innenleiter
- I_{L}: Leckstrom
- I_{Q}: Stromquelle
- U_{Q}: Wechselspannungsquelle
- Z_{A}: Abschlussimpedanz
- Z_{L}: Leitungsimpedanz
- Z_{Q}: Quellenimpedanz
- ΔU: Spannungsdifferenz

### Liste der zitierten Schriften

- [1]: «SIEMENS Euroloop S21 damit die Information beim Punkt nicht endet»
Bestellnummer A19100-V010-B047
HTS 9040/100
Herausgeber Siemens Schweiz AG, CH - 8304 Wallisellen
- D1: US 3,576,524
«Systems for transmitting information to moving trains»
Harry Heggie Ogilvy
Assingee British Railways Board, Londen
- D2: DE 2 048 849
«Nachrichtenübertragungssystem unter Verwendung eines koaxialen Kabels»
Fujitsu Ltd., Kawasaki, Kanagawa JP
- D3: EP 1 413 495 A1
«Streckenseitige Antennenanordnung für ein Zugbeeinflussungssystem»
Siemens Schweiz AG, 8047 Zürich
Veröffentlichungstag 28. April 2004

## Patentansprüche

1. Verfahren zur Datenübertragung zwischen einem schienengebundenen Fahrzeug und einer sich längs eines Schienenstrangs erstreckenden Übertragungseinrichtung (E2) mittels eines elektromagnetischen Feldes,
wobei
die Übertragungseinrichtung (E₂) durch eine mindestens teilweise als Leckkabel gestaltete Stromschlaufe (L) gebildet ist und die zu übertragenden Daten stromgetrieben mittels einer Stromquelle (I_{Q}) in die Stromschlaufe (L) eingeprägt werden und dass die Stromschlaufe (L) am Abschluss (Z_{A}) fehlangepasst auf 0Ω gesetzt wird.

2. Verfahren nach Anspruch 1,
**dadurch gekennzeichnet, dass**
die Impedanz (Z_{Q}) der Stromquelle (I_{Q}) in einen Bereich von 20 kΩ bis 100kΩ, vorzugsweise auf etwa 50kΩ eingestellt wird.

3. Verfahren nach Anspruch 1 oder 2,
**dadurch gekennzeichnet, dass**
die Stromschlaufe (L) über eine Länge von mehreren hundert Metern entlang des Schienenstranges verlaufend angeordnet wird.

4. System zur Datenübertragung zwischen einem schienengebundenen Fahrzeug und einer sich längs eines Schienenstrangs erstreckenden Übertragungseinrichtung (E₂) mittels eines elektromagnetischen Feldes,
wobei
die Übertragungseinrichtung (E₂) als Leckkabel ausgestaltete Stromschlaufe (L) ausgebildet ist und die zu übertragenden Daten stromgetrieben mittels einer Stromquelle (I_{Q}) in die Stromschlaufe (L) einprägbar sind und dass die Impedanz der Stromschlaufe am Abschluss (Z_{A}) fehlangepasst 0Ω beträgt.

5. System nach Anspruch 4,
**dadurch gekennzeichnet, dass**
die Impedanz der Stromquelle (Z_{Q}) in einen Bereich von 20 bis 100 kΩ, vorzugsweise auf etwa 50 kΩ, beträgt.

6. Verfahren nach Anspruch 4 oder 5,
**dadurch gekennzeichnet, dass**
die Stromschlaufe (L) über eine Länge von mehreren hundert Metern entlang des Schienenstranges verläuft.

## Claims

1. Method for data transmission, by means of an electromagnetic field, between a rail-borne vehicle and a transmission device (E₂) extending along a section of track, with
the transmission device (E₂) being formed by a current loop (L) embodied at least in part as a leaky feeder cable and the data to be transmitted being impressed current-driven into the current loop (L) by means of a current source (I_{Q}) and by the current loop (L) being set at its termination (Z_{A}) mismatched to 0Ω.

2. Method according to claim 1
**characterised in that**
the impedance (Z_{Q}) of the current source (I_{Q}) is set to range between 20 kΩ and 100kΩ, preferably being set to 50kΩ.

3. Method according to claim 1 or 2,
**characterised in that**
the current loop (L) is arranged to extend over a length of several hundred metres along the section of track.

4. System for data transmission, by means of an electromagnetic field, between a rail-borne vehicle and a transmission device (E₂) extending along a section of track, with
the transmission device (E₂) being embodied as a current loop (L) designed as a leaky feeder cable and the data to be transmitted being able to be impressed current-driven by means of a current source (I_{Q}) into the current loop (L) and with the impedance of the current loop at its termination (Z_{A}) amounting to 0Ω mismatched.

5. System according to claim 4,
**characterised in that**
the impedance of the current source (Z_{Q}) ranges between 20 and 100kΩ, preferably amounting to around 50kΩ.

6. Method according to claim 4 or 5,
**characterised in that**
the current loop (L) extends over a length of several hundred metres along the section of track.

## Revendications

1. Procédé de transmission de données entre un véhicule guidé et un dispositif ( E2 ) de transmission s'étendant le long d'une voie ferroviaire au moyen d'un champ électromagnétique,
dans lequel
le dispositif ( E2 ) de transmission est formé par une boucle ( L ) de courant conformée au moins en partie en câble de fuite et les données à transmettre sont injectées dans la boucle ( L ) de courant par du courant au moyen d'une source ( I_{Q} ) de courant et en ce que la boucle ( L ) de courant est mise, de manière désadaptée, à 0 Ω à la terminaison ( Z_{A} ).

2. Procédé suivant la revendication 1,
**caractérisé en ce que**
on règle l'impédance ( Z_{Q} ) de la source ( I_{Q} ) de courant dans une plage de 20 kΩ à 100 kΩ, de préférence à environ 50 kΩ.

3. Procédé suivant la revendication 1 ou 2,
**caractérisé en ce que**
la boucle ( L ) de courant s'étend sur une longueur de plusieurs centaines de mètres le long de la voie ferroviaire.

4. Système de transmission de données entre un véhicule guidé et un dispositif (E₂) de transmission s'étendant le long d'une voie ferroviaire au moyen d'un champ électromagnétique,
dans lequel
le dispositif ( E₂ ) de transmission est formé sous la forme d'une boucle ( L ) de courant conformée en câble de fuite et les données à transmettre peuvent être injectées dans la boucle ( L ) de courant par du courant au moyen d'une source ( I_{Q}) de courant et en ce que l'impédance de la boucle de courant est, d'une manière désadaptée, de 0 Ω à la terminaison ( Z_{A} ).

5. Système suivant la revendication 4,
**caractérisé en ce que**
l'impédance de la source ( Z_{Q} ) de courant est dans une plage de 20 kΩ à 100 kΩ, en étant de préférence d'environ 50 kΩ.

6. Système suivant la revendication 4 ou 5,
**caractérisé en ce que**
la boucle ( L ) de courant s'étend sur une longueur de plusieurs centaines de mètres le long de la voie ferroviaire.
